# EUROPEAN PATENT APPLICATION

(11) **EP 4 316 639 A1**
(43) Date of publication of application: **07.02.2024**
(21) Application number: 22778228.1
(22) Date of filing: 01.04.2022
(51) Int. Cl.: B01J 8/00, C10B 57/00, C09C 1/00, C10L 1/00, C10L 3/00

(54) **SYSTEM FOR THE ENERGY-EFFICIENT TRANSFORMATION OF MIXED PLASTIC WASTE INTO HYDROCARBONS, METHOD FOR THE ENERGY-EFFICIENT TRANSFORMATION OF MIXED PLASTIC WASTE INTO HYDROCARBONS, HYDROCARBONS, AND USES THEREOF**

(30) Priority: 01.04.2021 BR 102021006380; 31.03.2022 BR 102022006256
(71) Applicant: Valoren Recuperadora de Resíduos Ltda., 13347-434 São Paulo (BR)
(72) Inventor: MATHIAS ALOYSIUS BECKER NETO, Carlos, 04601-002 São Paulo (BR); DEMARCHI NETO, Ferdinando, 05630-010 São Paulo (BR)
(74) Representative: Clarke, Modet y Cía., S.L.
(86) International application number: PCT/BR2022/050117
(87) International publication number: WO 2022/204776

(57) **Abstract**

The present invention relates to a system and a process for the energy-efficient transformation of various plastic waste into hydrocarbons in liquid, paste, solid and gaseous form for application in products in the value chain of the plastic circular economy.

## Description

### FIELD OF INVENTION

The present invention falls within the field of waste processing, more precisely in the area of reuse and conversion of material waste into recycled products and describes an energy-efficient system and a process for transforming various plastic waste into recycled hydrocarbons in liquid form , pasty, solid and gaseous for use in various applications as a substitute for fossil and non-fossil products applied preferably in the circular economy of the plastics chain, such as r-naphtha as a recycled raw material replacing fossil naphtha as an input for the petrochemical industry, light r-hydrocarbons used as substitutes for chemical inputs of fossil origin, light and heavy r-paraffins to replace fossil paraffins used in industrial use or use in personal use products, recycled r-carbon black to replace carbon black fossil. Some byproducts may also have other applications, such as products used in energy applications such as r-diesel, as a substitute for fossil diesel, recycled waste r-gas to replace fossil gases and electrical energy from renewable sources, in addition to other r-hydrocarbons as recycled raw materials applied to replace solid hydrocarbons.

### GROUNDS OF INVENTION

The intense generation of solid waste represents one of today's biggest challenges. Due to economic and population growth and technological advances, a greater amount of waste is produced, and natural resources become increasingly scarce.

Given the technological advances, many products are discarded even before the end of their useful life, which increases the already significant load of solid waste that must be managed by public authorities. Furthermore, the accelerated and constant industrial production of different sectors has also generated a high amount of waste in Brazil and around the world.

In parallel, more severe legislation, such as the National Solid Waste Policy (PNRS), has led companies to assume responsibility for the environmental consequences of their operations. Such responsibilities include the environmental impact caused by waste generated in the production process.

Therefore, given the constant population growth and the accelerated development of industrial sectors, it is necessary to seek solutions and innovations for the management and adequate final disposal of solid waste generated. The option of reusing waste as raw material for other industries can be an attractive possibility, as it can generate a reduction in financial expenses and environmental impacts, in addition to increasing the production chain with the creation of new jobs.

Furthermore, it is known that most of the products we currently consume are made or packaged in plastic: packaging, toys, furniture, fabrics and automobiles are just a few examples. The use of the material revolutionized the industry, but also created a major challenge for the planet: the accumulation of plastic waste.

The reuse of plastic waste still has a low rate when compared to the reuse of metal waste. Plastic recycling in Brazil is around 20%.

In this context, techniques and strategies are created with the purpose of helping the problem of waste generation and accumulation. Employing plastic reuse methods is an urgent issue for industries that believe that sustainable development is possible, seeking a balance between economic growth and respect for the environment.

Currently available plastic waste recovery processes focus on pure rigid plastics, meaning that plastics in the form of films, flexible plastics, multilayer plastics or those with several components in their composition do not have economically viable recycling routes. Therefore, it is essential to develop technologies that allow the valorization of flexible, multilayer, or multicomponent plastic materials through the transformation of these materials into products that have the quality of replacing traditional fossils and economic value that justifies the costs used in this transformation, promoting thus the circular economy.

In general, plastic transformation processes developed or under development seek to produce hydrocarbons with the aim of generating energy or with the aim of producing various oils instead of reinserting the product as raw material for chemical companies. Some processes that sought to produce materials focused on the production of inputs for refineries and not on the production of raw materials directly applicable in chemical product production processes.

An additional important challenge to be overcome is the economic viability of processes for transforming plastic waste into products. To achieve this viability, it is essential that production systems are efficient, particularly in terms of energy consumption and the ability to absorb raw materials with great variability, and still deliver products that meet strict specifications.

### PRIOR ART

Some prior art documents describe ways of treating plastic waste to generate new products, for example:

Document US 10131847 describes a process for treating waste plastic material to provide at least one combustible product in accordance with specifications. The plastic material is melted in an extruder and loaded into a pyrolysis reactor, which follows a batch process, and has an oxygen-free atmosphere to thermally degrade the material and thus form pyrolysis gases. The pyrolysis gases are brought into contact with the plates in a contactor container, so that some long-chain gas components are condensed and returned to be pyrolyzed again to achieve thermal degradation. Short chain gas components exit the contactor in gaseous form and proceed to distillation to provide one or more fuel products in accordance with specifications. A tube directly connects the pyrolysis chamber to the contactor, being suitable for transporting upward-moving pyrolysis gases and long-chain liquid downward flow for thermal degradation. Next, the pyrolysis gas goes through a fractional distillation process in several stages made using, among other elements, two distillation towers in series, one with atmospheric pressure and the other with vacuum with a high volume of liquid recirculation.

Therefore, the present invention presents the following advantages when compared to the above-mentioned document: i. Use of thermo-catalytic degradation as a way to ensure better product quality by facilitating the fractionation process; ii. Process uses extended batches and continuous feeding/production with rapid discharges, increasing reactor productivity and reducing incrustations; iii. Improvement of the quality of carbon ash to achieve carbon black and activated carbon specifications; iv. Simpler fractionation process with lower capex without requiring, for example, a vacuum distillation tower, due to the better quality of the pyrolysis gas stream when going through the thermo-catalytic cracking process; vi. Higher energy efficiency, reducing opex, by reusing r-gas gases in the burners and high recirculation of heating gases.

Document GB2158089 describes a plastic waste treatment process, which comprises the following steps: (a) melting waste plastics, e.g. in heavy oil; (b) heating the melt to produce gas; (c) gas cracking; (d) stabilization of molecules; (e) cooling the gas to approximately room temperature and collecting the oily liquid condensed during cooling of the gas; and (f) fractional distillation of the oily liquid received from step (e) to obtain fuel oil of various boiling points.

Thus, the present invention presents the following advantages when compared to the above-mentioned document: i. Cracking reactor of the present deposit can produce pyrolysis gas without requiring a series of three reactors of document GB 2158089; ii. The heating system of the present invention directly transfers heat to the input material without requiring the use of heavy oil, which introduces greater complexity into the heating system and makes controlling contaminants in the final product more complex.

Document PI 0508115-7 describes a process and a plant for the thermo-catalytic conversion of waste materials into reusable fuels and a fuel produced by the process, which involves the steps of applying the molten waste material in one or more pyrolysis chambers through heated distributors and valves and carrying out pyrolysis of the residual material in a gaseous state in an oxygen-purged and pressure-controlled environment. The pyrolytic gases are then transferred to a catalytic converter where the molecular structure of the gaseous material is changed in structure and shape, and the gases are then transferred to one or more condensers to distill and cool the gases into their respective fractions. After post-pyrolysis treatment, the fuel fractions then form a usable fuel, which is mostly equivalent to diesel with a final boiling point of 348.5°C. This includes melting the residual (plastic) material before application to any of the pyrolysis chambers, making the movement of the material in the catalytic tower a semi-continuous operation, directing the melted residual material into one or more, but preferably four, pyrolysis chambers, making each chamber capable of operating independently and in a batch system. Optionally, there is mechanical removal of residual carbonized material from the pyrolysis chamber through the use of an internal helical screw or other appropriate means after completion of a batch followed by a cooling cycle of the pyrolysis chamber.

Therefore, the present invention presents the following advantages when compared to the above-mentioned document: i. Semi-continuous and continuous operation of each chamber, substantially increasing the productivity of each pyrolysis reactor, due to the material feeding system and solids removal from the pyrolysis chamber being dedicated to each reactor; ii. Product valorization of carbon ash, such as carbon black or activated carbon using the roasting reactor; iii. Ability to produce a larger fraction (above 50% by mass) of liquids and lighter hydrocarbons (end boiling point 220°C or 310°C) following strict specifications as this deposit employs a reflux system at the reactor exit and also a catalysis process before the pyrolysis oil stream enters the fractionation system; iv. Lower energy consumption results from greater thermal efficiency through recirculation of hot heating gases and use of synthesis gas in the production of thermal energy, making the process self-sufficient in thermal energy.

Document EP3311969A1 refers to a device for thermal decomposition of polyethylene and polypropylene waste. The device described in this prior art document uses at least two reactors connected in parallel, one or both of which use a removable furnace. In addition, the device also uses: a unit for fractionating polymeric raw materials, which are in the form of a vapor-gas mixture, which consists of a heat exchanger; a hydrocarbon collection tank with boiler for accumulation and reheating of the internal volume; a dewaxer; a rectification column to separate the diesel and gasoline fractions and a boiler; a tubular heat exchanger. This process also uses strip-shaped titanium metal catalysts that are installed inside the heat exchanger tubes/passages.

However, it appears that the focus of such document is on the generation of motor fuels (gasoline, diesel), burning oil, hydrocarbon gas and coke/char. Nevertheless, the present invention has the following advantages when compared to the above-mentioned document: i. Output gases from the pyrolysis reactor undergo reflux to prevent molecules with a lot of carbon from passing into the condensation system, and this could result in productivity losses due to clogging and scale, even if the system uses catalysts and "dewaxing" as a way of cracking the hydrocarbon molecules to the required size and thus avoid; ii. Continuous process; in the present invention there are no intermediate stocks of material in process such as a reservoir heated by a boiler, and thus it is more energy efficient and allows greater process stability resulting in better product quality; iii. Simpler and less expensive fractionation system using a thermo-catalytic process followed by reflux and additional catalysis before starting the fractionation step; iv. Better use of the complete feedstock since the carbon ash is treated by a specific roasting reactor. The above-mentioned document also presents two versions for the pyrolysis reactor. In version 1 *("periodic mode implementation"*) the authors precisely detail a process that alternates two reactors producing pyrolysis gases to be processed downstream of the proposed system. In this version 1, the reactors are stopped, cooled, cleaned and recharged alternately, thus always having one reactor producing pyrolysis gases, and another stopped. In version 2 (*"continuous mode implementation"*), the authors describe very broadly without highlighting either the system components or how the continuous feeding and production system effectively operates to ensure the continuous and safe operation of the reactors. In this case, the present invention is more productive as it describes in detail a feeding system that allows operation of pyrolysis reactors in an extended batch process and also in a continuous operation process, ensuring greater productivity and thus economy for the system.

Document BR 112021000086-0 A2 describes a plant process for thermo-catalytic conversion that employs catalytic hydrogenation of waste materials into reusable fuels. Furthermore, this document proposes the reuse of the energy obtained in the method so that the method is self-sufficient in terms of energy, so that the method uses only a limited amount of extracted petroleum products, thus reducing potential man-made CO₂ emissions.

Even so, the present invention presents the following advantages when compared to the above-mentioned document: i. it does not employ a hydrogenation process of the pyrolysis gas stream, which requires injection of industrial hydrogen, which increases production costs. The present invention, due to the characteristics of the reactor-reflux set, process parameters and use of catalysts, achieves product specifications with high yield without requiring the hydrogenation step; ii. There is no detailed description or specification of the system for feeding and removing solids from the reactor, which are fundamental parts to ensure productivity and quality of the product that comes out of primary cracking, and which determines the need for downstream treatment and fractionation systems. The cruder and more unstable the product from the primary cracking reactor, the more complex and costly the treatment and fractionation required to obtain hydrocarbon products; iii. The document in question does not have a step in its process to treat the carbon ash from the primary reactor outlet to achieve specifications for use as a product either as carbon black or activated carbon. The valorization of this product is important for the economicity of the process; iv. Another important part of the process's economicity is the maximum use of the synthesis gases formed during cracking to generate thermal energy for the process. The above-mentioned document does not specify the system for reusing such gases, nor the recovery system for hot gases to reduce thermal energy consumption and thus make the process energy self-sufficient.

Document WO2021/209276 A1 describes a process and a plant for thermal conversion that does not require the use of catalysts for transforming waste materials into reusable fuels. Additionally, this document provides a pyrolysis process for obtaining petrochemical products from plastic waste, particularly based on the use of carbon nanoparticle-based reagents, instead of the use of catalysts, in which lower temperature, pressure and energy are used to obtain better results.

Therefore, the present invention presents the following advantages when compared to the above-mentioned document: i. it does not use carbon nano-elements as a reagent, which, as they are reagents and not catalysts, end up being consumed in the cracking process, which will require their constant purchase for use, which generates costs for the process; ii. The authors of the above-mentioned document describe in a very broad way without highlighting either the components of the system or how the continuous feeding and production system effectively operates to ensure the continuous and safe operation of the reactors. In this case, the present invention is more productive as it describes in detail a feeding system that allows operation of pyrolysis reactors in an extended batch process and also in a continuous operation process, ensuring greater productivity and thus economy for the system; iii. The document in question uses industrial gas (natural gas) purchased on the market as a source of thermal energy, which makes the process very costly, since it does not reuse the synthesis gas generated by the cracking process itself as a source of thermal energy. The efficient use of this gas is crucial to the economics of the process.

Therefore, the system proposed in the present invention presents some advantages in relation to the prior art, such as: (i) High yield for naphtha-type **petrochemical product equivalent to "R-naphtha" (density below 0**.78 kg /l); (ii) Simpler process with lower capex and high modularity (much simpler downstream); (iii) High energy efficiency using hot air recirculation and combustion gas as the main fuel; (iv) avoids the use of specific purge gas (pure N2), as it would hinder the efficiency of energy reuse of waste gas; (v) extended batch and also the possibility of continuous processing to optimize reactor productivity; (vi) it is capable of absorbing a wide variety of different plastic waste and still delivering final products that meet very strict specifications. Furthermore, it is focused on producing products that can be reinserted into the circular economy of the plastic chain. One of the products produced by the system and process of the present invention is of the highest possible yield of the equivalent naphtha type **"R-naphtha" with strict specifications (density below 0.78 kg/l) and without the presence** of waxes, from various plastic waste (flexible, multilayer and multicomponent).

### SUMMARY OF THE INVENTION

The present invention aims to propose a system and a process for the energy-efficient transformation of various plastic waste into hydrocarbons in liquid, pasty, solid and gaseous form for use in various applications, as a substitute for fossil and non-fossil products applied preferably in the circular economy of the plastics and chemical chain, such as r-naphtha (predominantly from 6 to 14 carbons) as a recycled raw material to replace fossil naphtha as an input for the petrochemical industry, light r-hydrocarbons (from 5 to 11 carbons) used as replacements for chemical inputs of fossil origin, light and heavy r-paraffins (from 20 to 24 carbons) to replace fossil paraffins used in industrial use or use in personal application products, recycled r-carbon black or activated r-carbon (treated carbon ash) to replace fossil carbon black. Some byproducts may also have other applications, such as products used in energy applications such as r-diesel (from 12 to 20 carbons), as a substitute for fossil diesel, recycled waste r-gas (from 1 to 4 carbons) to replace fossil gases and electrical energy from renewable sources, in addition to other r-hydrocarbons as recycled raw materials applied to replace solid hydrocarbons.

### BRIEF DESCRIPTION OF THE FIGURE

Figure 1 shows a general scheme of the system proposed in the present invention.
Figure 2 shows a side view of the main reactor (7) used in the present invention.
Figure 3 shows a side view of the reflux tower (8) used in the present invention.
Figure 4 graphically shows extended batch production with production cycles from 15 to 30 hours, highlighting the gas x liquid relationship in relation to the general production of a main reactor (7) operating individually.
Figure 5 graphically shows extended batch production with production cycles from 15 to 30 hours, highlighting the combined production of 3 main reactors (7) operating together. The top line shows total hydrocarbon production, and the bottom line shows oil production (liquids and paraffin).
Figure 6 shows a general scheme of the system detailing the example of implementing the invention considering the mass and energy balance for a plant with three reactors operating together with a horizon of one year of operation.
Figure 7 shows a graph of the accumulated distilled mass versus temperature, presenting empirical data that demonstrate the change in the distillation curves of the different products when subjected to three different scenarios: without catalyst, with Catalyst C and Catalyst F.

### DETAILED DESCRIPTION OF THE INVENTION

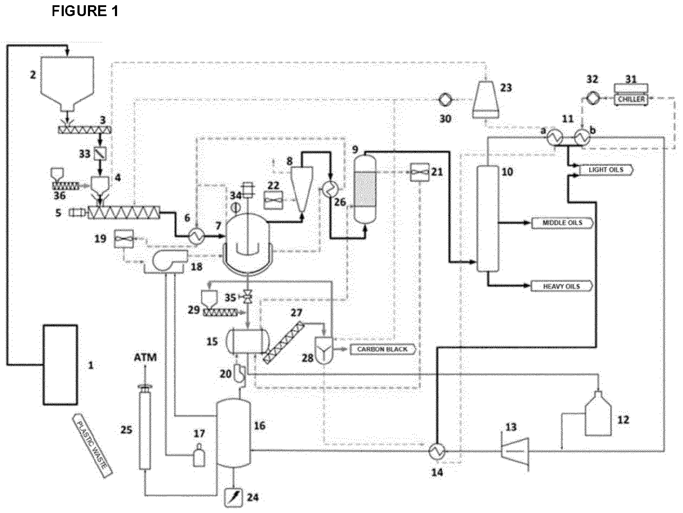

The present invention refers to system for energy-efficient transformation of various plastic waste into hydrocarbons in liquid, paste, solid and gaseous form for application in products in the value chain of the plastic and chemical circular economy. Said system, as represented by Figure 1, comprises the following components:
- Feeding Module;
   - material preparation system (1);
   - storage silo (2);
   - feeder and dosing screw (3);
   - solid flow meter (33);
   - catalyst doser (36);
   - compactor (4);
   - melting screw (5);
   - heat exchanger (6);
   - melting screw fan (19);
- Reaction Module;
   - main reactor (7);
   - level meter (34);
   - burner and furnace (18);
   - reflux tower (8);
   - reflux fan (22);
   - heat exchanger (26);
- Condensation/Separation Module;
   - catalysis tower (9);
   - condensation system (10);
   - heat exchangers (11a and 11b);
   - water cooling tower (23);
   - general cooling system pump (30);
   - chiller (31);
   - cooling system pump (32);
- Exhaust/Waste r-gas Module;
   - gas washer (bubbler) (12);
   - low pressure compressor (13);
   - recuperative heat exchanger (14);
   - synthesis gas tanks (waste r-gas) (16);
   - LPG tanks (17);
   - electrical energy generator (24);
   - flare (25);
- Discharge Module;
   - discharge control valve (35);
   - roasting reactor (15);
   - roasting reactor burner and furnace (20);
   - catalysis tower fan (21);
   - roasting reactor removal screw (27);
   - carbon ash cooler (28);
   - sealing screw (29).

In a second embodiment, the present invention relates to a process for energy-efficient transformation of various plastic waste into liquid hydrocarbons using the previously described system. Said process comprising the following steps:
(a) Preparation of the material with removal and control of contaminants, and removal of water;
(b) Homogenization and feeding of the material into the pyrolysis reactor;
(c) Pyrolysis reaction;
(d) Treatment, condensation and separation of produced hydrocarbons;
(e) Treatment and storage of synthesis gas;
(f) Use of stored synthesis gas to heat the main and secondary reactors and generate electrical and thermal energy;
(g) Thermal reuse and exhaustion of burned gases; and
(h) Removal and treatment of carbon ash.

The functioning of the system and the transformation process will be further detailed below.

Initially, the material is prepared (1), through mechanical and chemical processing, with the aim of removing main contaminants to meet the final specification of the products and removing water to optimize processing. Such materials come from landfill or recycled materials. In addition to removing contaminants, procedures such as crushing and grinding aim to reduce particle size to approximately 1 inch to facilitate washing. Additionally, separation and agglutination procedures aim to increase particle density. The main steps in the preparation phase for their respective objectives vary according to the origin of the plastic material received and the acceptable limits of contamination in the final product, however, they can be composed of the following steps in their most extensive form:
a.1 Fines separating sieving, equivalent to a rotating trommel sieve;
a.2 Manual separation line to remove fabrics and bulky items;
a.3 Magnetic separation to remove magnetic ferrous material;
a.4 Crushing to reach a maximum particle size of 250mm;
a.5 Removal of plastics (films) by suction;
a.6 Grinding to obtain particles with a maximum size of 25mm;
a.7 Washing with a solution bath to remove contaminants such as chlorinated, oxygenated and silicon;
a.8 Centrifuge drying to eliminate residual impurities and initial drying;
a.9 Agglutination for final drying of the material and increasing apparent density; and
a.10 Storage and transportation.

As a result of the preparation step (1), the material that goes to the following steps must have its characteristics monitored so that it can meet the following specifications:
- Maximum moisture content 5%;
- Bulk density between 200 kg/m³ and 450 kg/m³;
- Maximum particle size 25mm;
- Maximum 300 ppm-m of total chlorides;
- Maximum 1100 ppb-m of total oxygenates;
- Maximum 300 ppb-m of nitrogen;
- Maximum 500 ppb-m of total sulfur;
- Maximum 15 ppm-m arsenic;
- Maximum 50 ppm-m copper;
- Maximum 5 ppm-m of mercury;
- Maximum 5000 ppm-m sodium;
- Maximum 150 ppm-m of lead; and
- Maximum 1100 ppm-m silicon.

These acceptable limit specifications can be changed according to the application of the final products.

From the preparation line, the raw material is sent to a storage silo of around 3 m³ (2) which aims to ensure homogeneity of the material, in addition to continuous feeding always as the reactor feeding system material demand.

The moment the storage silo (2) is full, feeding starts. After leaving the storage silo (2), the raw material will pass through a feeder and dosing screw (3) that standardizes the flow of plastic material removed from the silo (2) and through a control that combines the reading on the solid flow meter (33) with the dosage made by the catalyst doser (36) allows the catalyst to be added precisely when entering the compactor (4) at a rate between 0.1% and 10% by mass depending on the input of raw material. This dosage control is done by continuous adjustment between the fed mass of plastic material that is measured by the volume meter (33) and the volume of catalyst introduced by the catalyst doser (36). Control parameters are given according to the material to be processed and specification/yield of the desired product.

The catalyst aims to increase the rate at which polymer molecules break down and favor the formation of light hydrocarbons. The catalyst, mainly zeolite-based acid catalyst, is inserted into the compactor (4), at a rate between 0.1% and 10% (according to the type of material and desired final product) in mass relative to the input of raw material. This catalyst is stored in a silo-dosing assembly (36) and is dosed into the compactor (4). The feeding system continues with sending the raw material to the compactor (4), which has the function of increasing the minimum density of the material to around 450 kg/m³ to reduce the risk of oxygen entering the system. Furthermore, the system works with a rotation of 5 to 60 rpm and consequent compression force and with a refrigeration system, capable of reducing the temperature to maintain it at a maximum of 30 °C, to prevent the raw material from melting inside. The compactor (4) is cooled by a jacketing system, which is based on a coating that enters with the cooling liquid sent by a pump (30) from a cooling tower (23). After the input of the raw material together with 0.1% to 10% of the catalyst, the compactor (4) compresses at a compression ratio of 1:2.5, and drives the two materials to a melting screw (5).

The purpose of the melting screw (5) is to preheat the material to a temperature between 200 °C and 350 °C. After leaving the melting screw (5), the material enters a heat exchanger (6), which heats the material between 350 °C and 450 °C. The residence time of polymers in this melting and heating system can vary between 90 seconds and 600 seconds. This heat exchanger (6) receives heat from the burnt gas from the furnace (18), after it leaves the main reactor jacket (7) to heat the material.

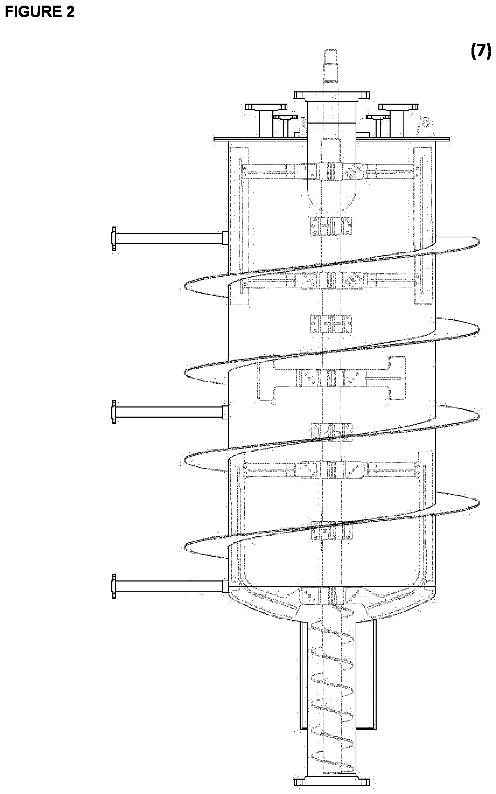

Upon leaving the heat exchanger (6), the material enters the main reactor (7). This cstr type reactor (continuous stirred-tank reactor), with a centralized and split anchor-shaped shaft (Figure 2), which works at a rotation between 1 and 30 rpm, and can rotate both clockwise and counterclockwise. The main reactor (7) has an LID (Length/Diameter) index between 3.5 and 7.0. The main reactor (7) is jacketed to receive the necessary heat from the furnace to carry out the pyrolytic reaction. In an example of pilot implementation, a burner with a power of 440,000 kCal/h was used.

The shaft of this reactor aims to homogenize the reactant mass, which weighs between 600 and 2000 kg, and control the removal of carbon black ash. At the base of the shaft, right after the anchor, there is a helicoid-shaped termination that, depending on the direction and speed of rotation of the shaft, guides the reactant mass in different directions. Controlling the rotation of this termination, together with the discharge valve (35) and sealing screw (29), allows reactions to be semi-continuous or continuous. In semi-continuous reactions, the discharge valve (35) operates closed, and the sealing screw (29) operates intermittently. In continuous reactions, the discharge valve (35) works with opening adjustments depending on the production of the main reactor (7) and consequent continuous operation of the sealing screw (29).

The material enters the main reactor (7) at a temperature between 350 °C - 450 °C. Upon entering, the raw material in the pasty state is heated until its temperature reaches between 420 °C - 460 °C, in a way that minimizes the residence time in the reactor. In this temperature range and with a gauge pressure of - 20.0 to + 50.0 KPa (-0.2 to + 0.5 Bar) the pyrolysis reaction takes place, which consists of the breakdown of plastic molecules, with the absence of oxygen, in molecules of 20 to 40 carbons, preferably of 24 to 28 carbons, which become in the gaseous state. The chemical reaction has a residence time between 10 minutes and 4 hours, preferably 2 to 3 hours, which must be applied depending on the desired product distribution. This chemical reaction generates products in three different physical states: i. solid: carbon ash in a broad form but that meets carbon black or activated carbon specifications; ii. pyrolytic oil, which contains R-naphtha; R-diesel, paraffins fractions and others; iii. waste r-gas. The proportion formed is 1% to 35% solids, 1% to 35% waste r-gas and 30% to 98% pyrolytic oil. This gas is pulled through a radial compressor (13) and sent to the reflux tower (8).

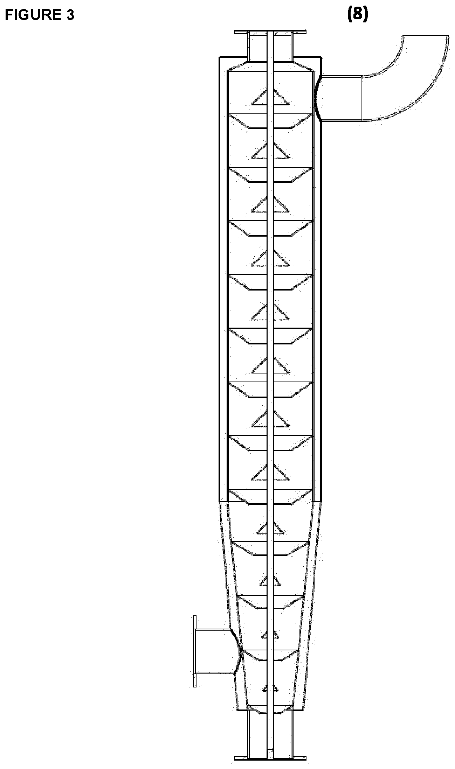

The reflux tower (8) (figure 3) is a jacketed conical vessel, without the presence of metals with a catalytic function, through which air circulates as refrigerant, composed of baffles and rings, without the application of perforated plates, which make it difficult to the ascending flow, creating turbulence (Reynolds number between 30,000 and 300,000) which increases thermal exchange with the cooled walls without causing condensate entrainment, preventing larger molecules of over 20 to 40 carbons (preferably 20 to 28 carbons) to pass through to the next phase of the process. These larger molecules condense and return by gravity to the reactor where they will be cracked again. The reflux is maintained at a temperature of 220 °C to 320 °C, preferably 240 to 280 °C, where its temperature control is done by a fan (22) that circulates cold air in its jacket. Upon leaving the reflux, the current will enter a heat exchanger (26), which absorbs the gases from the main reactor (7), using the driving force of the fan (19), which can increase the temperature to a range between 220 °C and 600 °C. °C. This temperature will be adjusted depending on the operating conditions required for the catalysis tower.

The catalysis tower (9), which has an LID index (Length/Diameter) of 3.0 to 5.0, aims to complete the breakdown of molecules that are larger in size than desired in the specification of the types of products being produced, thus allowing a more homogeneous production of products. The catalysis tower (9), which is composed of a solid catalytic bed of suitable dimensions, volume and porosity, directly depends on the type of catalyst used, as the residence time of the product must be sufficient for the desired molecule breakdowns to occur. This residence time of the hydrocarbon stream can vary from 2 to 12 seconds depending on the desired product. Another fundamental factor for the effectiveness of catalysis is the operating temperature, which must be between 350 °C and 550 °C according to the type of catalyst used and the desired final products. The catalysts used are generally acidic and of the zeolite type, with zeolite Y or clinoptilolite and ZSM5 aluminum silicate catalysts being preferably used.

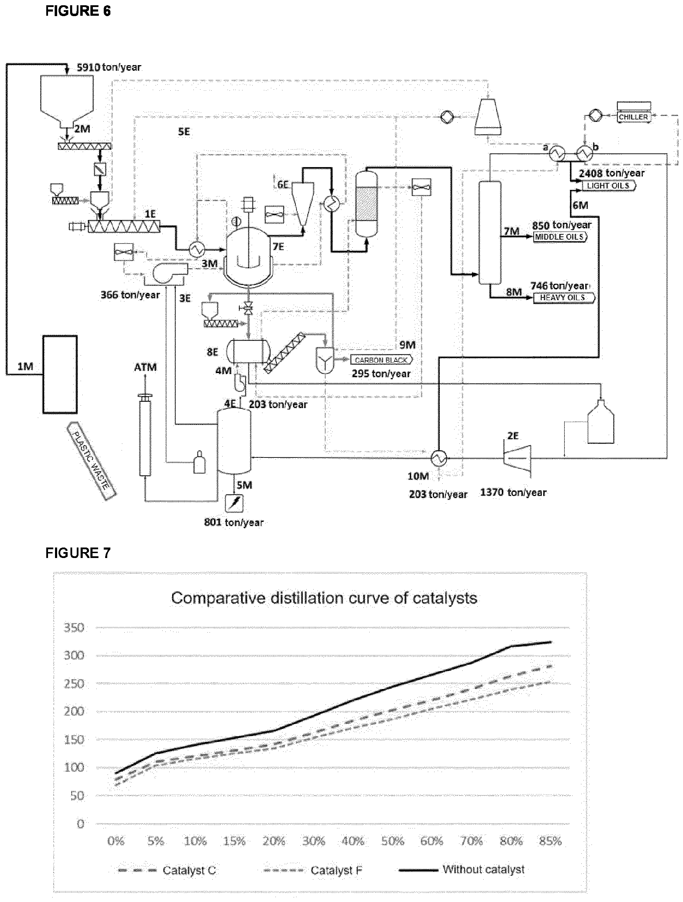

The process of the present invention can employ catalysts in two steps of the process: i. In the main reactor (7), where primary cracking occurs, also called liquid phase catalyst, ii. In the catalysis tower (9), where secondary cracking can occur, also called gas phase catalyst. The catalysts can be applied either individually in each phase or in joint operation, or the present deposit process can be operated without catalysts. But preferably, the catalysts are used together in their respective steps, as they generally reduce the energy level required to obtain lighter cracking products, whether in the liquid or gaseous phase. Figure 7 (axis X is % of accumulated distilled mass, axis Y is temperature) shows empirical data that demonstrate the change in the distillation curves of the different products when they have been subjected to three different scenarios: without catalyst, with Catalyst C and Catalyst F. In the case of application of catalyst in the liquid phase, which occurs in the reactor (7), a reduction in the energy level of around 10 to 15% can be expected, which translates into a reduction in thermal energy consumption. The gas phase, which takes place in the catalysis tower (9), can work with different types of catalysts or without any catalyst, but with a different efficiency in converting into lighter products and in energy consumption for the reaction. Different specifications of catalysts found in the Brazilian and international markets can be used successfully when adapting the catalysis tower to the required working conditions. Table 1 below illustrates this relationship of some different types of catalysts with the mass yields of the output products.

**Table 1: Mass yield depending on working temperatures and catalyst types**

| **TEMP. RANGE** | **% BY MASS OF OUTPUT PRODUCT** | | | | **TYPES OF CATALYST** |
|---|---|---|---|---|---|
| | **Heavy Oil** | **Diesel** | **Naphtha** | **Syngas** | |
| 220-380°C | 10-15% | 55-70% | 10-15% | 10-20% | Catalytic médium Zeolite acid |
| 450-550 °C | 5-10% | 10-15% | 45-55% | 20-40% | Catalytic médium Y Zeolite acid |
| 430-500 °C | 5-10% | 10-15% | 10-15% | 60-75% | ZSM-5 aluminum silicate or Y Zeolite |

After leaving the catalysis tower (9), the gas passes through a condensation system (10), which has the function of condensing this gas at temperatures of 240 °C and 310 °C. The volume of gas not condensed in this step, which is composed of lighter molecules, will go to condensers to be condensed at lower temperatures. Both products, after condensation, are sent to storage tanks.

The second step of condensation occurs in the heat exchangers (11a and 11b). The hot fluid condenses at a temperature of up to 110 °C, and is sent to the storage area. The heat exchanger (11b) reduces the temperature of the hydrocarbon stream to 10 °C, using chilled water, between 0 °C and -15 °C, preferably -5 °C, coming from a chiller (31). This condensate is also sent to storage. These last condensed oil fractions are called R-naphtha.

The third and final condensation point is in the recuperative heat exchanger (14). This condensation is primarily favored by the increase in pressure obtained by the compressor (13), rather than the pure reduction in temperature. The working pressure can vary from 1.5 bar to 6 bar, using a condensing temperature of 30 °C to 70 °C. This additional light pyrolytic oil can be mixed with the pyrolytic oil condensed in the heat exchangers (11a and 11b) as part of the R-naphtha composition or can be stored separately and used in different chemical inputs. This option is defined according to the application and defined need for the desired production.

There is a yield of 1% - 40% by mass of heavy pyrolytic oil (r-paraffin), 1% - 40% by mass of medium pyrolytic oil (r-diesel) and 20% - 98% by mass of light and very light pyrolytic oil (r-naphtha).

The incondensable gas (waste r-gas) leaving the heat exchangers (14) is then compressed to a higher pressure, between 1.5 bar and 6 bar, and sent to the gas storage system. It will be reused by the system for the production of thermal energy, for power generation and/or as r-LPG for petrochemical cracker feedstock.

Before the gas is compressed for use, it can be washed in a gas washer (bubbler) (12) with a solution of CaOH or NaOH, between 0.1 and 5%, preferably 0.5%, depending on the material to be processed. Another base can be used to remove existing impurities. The bubbler (12) works as a washer, in which the gas enters upwards, passing through an alkaline solution. This step is used in particular for gases generated in the roasting process that takes place in the secondary reactor/roasting reactor (15).

The compressor (13) has the function of stabilizing the production flow throughout the entire process from the main reactor (7) and also ensures the conditions for condensation of the very light pyrolytic oil in the recuperative heat exchanger (14), as described previously.

The waste r-gas tanks (16) have the function of storing the waste r-gas at a pressure of 1.5 to 6 bar.

The main use of the waste r-gas produced is to provide thermal energy for the pyrolysis reaction, as will be described below. However, there may be excess production of residual r-gas that can be sent for additional energy use through an electrical energy generator (24). This generator, when generating electrical energy, also allows thermal use either for heating through combustion gases or for cooling through thermal adsorption. All three energy uses (electrical energy, heat and cold) are used in the industrial process and contribute to the energy efficiency of the process as a whole.

The flare (25) is the safety system that burns the gas at sporadic moments, and can be used in times of emergency or to empty the system for eventual maintenance.

The main use for the gas stored in the residual r-gas tanks (16) is to feed the burners that provide thermal energy for the furnaces (18 and 20). The burner and furnace (18) heat the entire reaction system, working at temperatures between 750 °C and 1,200 °C. The pyrolysis reaction uses part of this energy with an operating temperature of 700 to 900 °C. The thermal energy generated in this same furnace also provides thermal energy for the plastic melting system in the heat exchanger (6) and for the heat exchanger (26) for heating the stream after reflow.

The burner and furnace (20) provide thermal energy for the roasting reactor (15) and also provides energy for the catalysis tower (9).

An alternative fuel gas can also be used for plant start-ups or in other eventualities. Both LPG and Syngas are transported to the burner and furnace (18) of the main reactor (7), and to the burner and furnace (20) of the roasting reactor (15) by the storage pressure of their tanks.

The energy use of the burner and furnace (18) is done through the recirculation of hot gas in a closed circuit using a fan (19). This circuit circulates hot air between: i. furnace (18), ii. main reactor jacket (7), iii. heat exchanger (26) post reflux tower (8) and iv. heat exchanger (6) for plastic melting. This closed circuit has adequate gas exchange through the removal of saturated gases and the entry of fresh air to ensure ideal conditions for burning syngas or LPG in the furnace burner. The return gas to the furnace (18) has a temperature between 400 and 550 °C. The ideal burning conditions for the burner, for example, pressure at the reactor jacket inlet of -7 mbar to -10 mbar, involve not only the chemical composition of the recirculated air (ensuring the necessary presence of oxygen without excess contaminants), but also balancing pressures and removing solid impurities eventually generated in the burning process.

Similarly, the burner and furnace (20) also have energy reuse through the recirculation of hot gas using the catalysis tower fan (22) as driving force. This temperature varies between 450 and 650 °C. In this case, the energy reuse circuit circulates the hot gas between: i. furnace (20), ii. roasting reactor jacket (15), and iii. catalysis tower jacket (9). This closed circuit has adequate gas exchange through the removal of saturated gases and the entry of fresh air to ensure ideal conditions for burning r-gas/syngas or LPG in the furnace burner, such as the fan circuit (19).

The fixed bed pyrolysis reaction produces carbon ash (carbon black or activated carbon) as a byproduct. In the case of extended batch reactions, the presence of carbon ash is imperceptible, in terms of reaction dynamics, until the moment the reaction/extended batch ends, and it is necessary to remove the residual solid material in the reactor bed. In the case of extended batch reactions or continuous reactions, it is essential to monitor and remove carbon ash when the accumulation and respective increase in concentration of this component reduces the efficiency of the reaction. The developed process has mechanisms for monitoring and removing the carbon ash formed throughout the reaction.

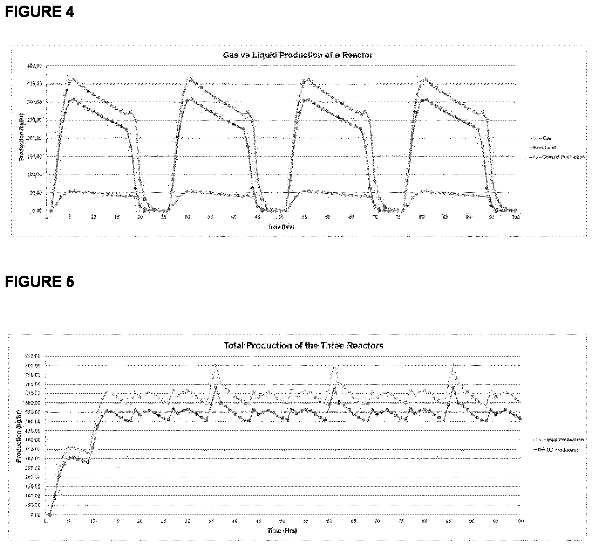

There are two forms of production using the process design developed here: i. Extended batch production with production cycles of 15 to 30 hours (Figure 4), ii. Continuous production without the need for stops to remove ash due to saturation of the reactant mass. In both cases, it is essential to monitor the state of the reactant mass and action on the reactant mass to remove carbon ash, using a level sensor.

In the case of the extended batch, the discharge valve (35) operates closed and opens only when the material contained in the main reactor (7) is completely discharged. Once the material removed from the main reactor (7) enters the roasting reactor (15), the material roasting process begins, which occurs at a temperature between 500°C and 600°C. The reactant mass in the main reactor (7), when reaching the saturation point, is between 25 and 45%, preferably 30% of carbon ash, a value calculated depending on the production volume, it will be necessary to unload the carbon ash which are located inside the main reactor (7). The saturation point is determined by the relationship between the temperature of the reacting mass and gas production (Figure 5). When the increase in temperature no longer generates greater production, preferably 450 to 480 °C, the reaction must be stopped and the process of removing the reactant mass must begin.

After ensuring the formation of carbon ash in the lower third of the main reactor (7), manual unloading of the material begins. To this end, the split shaft has its direction of rotation reversed and its speed increased, thus the split shaft sends the material out of the main reactor (7) and into the roasting reactor (15) where the roasting process of the carbon ash is carried out. This roasting process seeks to ensure that the carbon ash will be processed to meet the specifications required for the application of this product as carbon black or activated carbon. To apply this product, in this case activated carbon, for example, the product must meet the following specifications: Humidity up to 5% (ASTMD2867), Density between 400 and 600 kg/m3 (DIN ISO 787-11), Surface area min 300 m2/g (DIN 66132) and Particle size (<100µm) minimum of 80% (CT-PA 17). During this phase, in addition to heating and continuous mechanical revolution of material, chemical components can be added to contribute to the required final chemical composition. The roasting reactor (15) has an LID (Length/Diameter) index between 4.3 and 5.6, and has a heating jacket supplied by the burner and furnace (20). The material inside the reactor is heated and mixed until the roasting reactor temperature sensor (15) reads 500-6000 °C. After reaching this determined temperature and processing time, the final product, whether carbon black or activated carbon, is extracted and stored. The gases eventually generated by this roasting process are also absorbed by the compression system and used as plant gases, once they are inserted into the bubbler (12).

This process can also operate continuously to remove carbon ash. In this case, the continuous form occurs with the discharge valve (35) having its opening controlled, the sealing screw (29) inserting material and the main reactor shaft (7) rotating between 20 and 30 rpm in the discharge direction. To achieve this, it is necessary that a balance point of carbon ash concentration (between 10% and 30%) be reached. In this case, the split shaft of the main reactor (7) must rotate in the direction of removing the reactant mass of the material at an appropriate rotation, between 20 and 100 rpm, preferably 30 rpm, to maintain the balance between the withdrawal rate and the stability of the reactant mass. This balance is also maintained through the operation of the discharge valve (35), which works with opening adjustments depending on the production of the main reactor (7) and the consequent continuous operation of the sealing screw (29).

This continuous removal also takes place in the roasting reactor (15), where, as described above, the material removed from the reactor will undergo a roasting process and the eventual addition of chemical components to achieve the desired specification of the carbon ash. The process parameters and specifications are the same as described above in extended batch operation.

After going through the roasting process in the roasting reactor (16), the activated carbon or carbon black products are conveyed through the removal screw (27) from the roasting reactor (15) to the cooler tank (28) by where it will remain for 5 to 15 hours until cooled (around 70 °C). Subsequently, the activated carbon or carbon black products can be used in the sealing screw (29) of the material removal system of the main reactor (7) or they can be sent to the final stock silo and packaging for use at the customer.

In a third embodiment, the present invention relates to hydrocarbons produced according to the described process. It should be noted that the above-mentioned hydrocarbons may present contaminants at the following maximum concentration alone or together. The control to meet such maximum levels of contaminants is carried out, for the most part, in the material preparation system (1):
- 300 ppm-m of total chlorides;
- 1100 ppb-m of total oxygenates;
- 300 ppb-m of nitrogen
- 500 ppb-m of total sulfur;
- 50 ppb-m of carbon disulfide;
- 100 ppb-m of mercaptans
- 10 ppb-m of carbonyl sulfide
- 50 ppb-m of hydrogen sulfide;
- 15 ppm-m of arsenic;
- 50 ppm-m of copper;
- 300 ppm-m of iron;
- 5 ppm-m of mercury;
- 5000 ppm-m of sodium;
- 150 ppm-m of lead; and
- 1100 ppm-m of silicon.

Additionally, the hydrocarbons produced can be mainly synthetic gases, preferably propane, butane, methane, ethane, propylene and iso-propylene, with a final boiling point of 30 °C; light hydrocarbon, preferably pentane, hexane and heptane, with an initial boiling point of 30 °C and a final boiling point of 80 °C; naphtha and diesel, mainly alkanes, paraffins, iso-paraffins and olefins, with respectively an initial boiling point of 80 °C and a final boiling point of 240 °C (r-naphtha), and an initial boiling point of 240 ° C and final boiling point of 310 °C (r-diesel); paraffin, mainly paraffins with low density linear chains, with an initial boiling point of 310 °C and a final boiling point above 330 °C, preferably solid at room temperature, and liquid between 35 °C and 55 °C; carbon ash under the characterization of carbon black product, with a particle size between 10 and 320 nm and apparent density (dbp) between 50 and 120, and under the characterization as an activated carbon product, Humidity up to 5% (ASTMD2867), Density between 400 and 600 kg/m³ (DIN ISO 787-11), Surface area min 300 m²/g (DIN 66132) and Particle size (<100µm) minimum 80% (CT-PA 17).

In a fourth embodiment, the present invention also refers to the uses of the hydrocarbons produced, including:
- Bottled recycled gas to replace fossil gas in heating applications (waste r-gas);
- Source for generating renewable energy from recycled gas (waste r-gas);
- Naphtha recycled in petrochemical crackers to produce virgin plastics (r-naphtha);
- Recycled additive for fossil diesel oil (r-diesel);
- Recycled raw materials for the chemical industry replacing fossil hydrocarbons (light r-naphtha/ r-diesel);
- Recycled chemical inputs replacing fossil inputs (light r-naphtha/ r-diesel);
- Sustainable burning oils to replace fossil oils (light r-naphtha/r-diesel);
- Recycled paraffins for industrial and non-industrial applications replacing fossil paraffins (r-paraffins);
- Recycled carbon black and activated carbon replacing fossil carbon black and activated carbon (carbon black and activated carbon);
- Valorization of low-value-added plastics, multilayer plastics and multicomponent plastics that could end up in landfill;
- Production of petrochemical naphtha from recycled sources (r-naphtha) to replace fossil naphtha;
- Production of diesel from recycled sources (r-Diesel) and replacement of fossil Diesel;
- Production of other hydrocarbons (r-hydro) with application in the chemical industry;
- Production of light paraffins (light r-paraffins);
- Production of heavy paraffins (r-heavy paraffins);
- Production of carbon black and activated carbon (r-carbon black and r-activated carbon);
- Production of synthesis gas (waste r-gas); and
- Production of electrical energy from renewable sources.

### Example of embodiment of the invention

For the sole purpose of demonstrating the operation of the present invention, which is not limited to these parameters, details of the process are provided as shown in Figure 6 and Table 2 below. Figure 6 contains an example of the general process flowchart of an operational plant and the mass and energy balance of this plant.

**Table 2: Mass and energy balance in each of the main lines of the plant used as an example**

| **Description** | **Line No.** | **Mass Flow (ton/year)** | **He (kCal/ton)** | **Energy (GCal/year)** |
|---|---|---|---|---|
| **Material Input** | 1M | 5910 (100%) | N/A | 65258 (88.0%) |
| PP or PE | 2M | 5910 (100%) | N/A | 65258 (88.0%) |
| **Energy Input** | N/A | N/A | N/A | 73873 (100%) |
| Fusion Screw | 1E | N/A | N/A | 2088 (3.0%) |
| Compressor | 2E | N/A | N/A | 192 (1.0%) |
| Burners | 3E & 4E | N/A | N/A | 6334 (8.0%) |
| **Material Output** | N/A | 5910 (100%) | N/A | 73873 (100%) |
| Process Gas | 3M & | 569 (9.6%) | 11132000 | 6334 (9.0%) |
| | 4M | | | |
| Excess Gas | 5M | 801 (13.6%) | 11132000 | 8917 (12.0%) |
| Light Fraction (Naphtha) | 6M | 2408 (40.7%) | 10733000 | 25845 (35.0%) |
| Middle Fraction | 7M | 850 (14.4%) | 10178000 | 8651 (12.0%) |
| Heavy Fraction | 8M | 746 (12.6%) | 9426000 | 7032 (10.0%) |
| Carbon black | 9M | 295 (5.0%) | 7047000 | 2079 (2.0%) |
| Water Loss in Exchangers | 10M | 241 (4.1%) | N/A | N/A |
| **Power Output** | N/A | N/A | N/A | 15015 (20.0%) |
| Water Cooling Tower | 5E | N/A | N/A | 1501 (10.0%) |
| Reflux Tower Fan | 6E | N/A | N/A | 150 (1.0%) |
| Losses of Saturated Gases from Reactors | 7E & 8E | N/A | N/A | 450 (3.0%) |
| System Losses | N/A | N/A | N/A | 950 (6.0%) |

It is important to mention that the present invention is implemented in operational plants having the feeding module, the reaction module and the discharge module in modules, which allows a plant to have its production capacity adjusted to the availability of raw material at the deployment site. The process of this invention considers the use of 2 to 9 modules operating in parallel in the same plant. The rest of the modules (material preparation module, fractionation module, exhaust module) are unique, regardless of the number of modules a plant has. In the specific case of Figure 6 and Table 2, the mass and energy balance are made for a plant with three reaction modules.

Finally, considering that the present invention can be implemented in different ways, without departing from its essential characteristics, the examples above should be understood as non-limiting, since they only illustrate how the present invention can be reproduced.

## Claims

1. System for energy-efficient transformation of various plastic waste into hydrocarbons, **characterized by** comprising:
• Feeding Module;
• Reaction Module;
• Condensation/Separation Module;
• Exhaust/Waste r-gas Module; and
• Discharge Module;
wherein the feeding module comprises:
- material preparation system (1);
- storage silo (2);
- feeder and dosing screw (3);
- solid flow meter (33);
- catalyst doser (36);
- compactor (4);
- melting screw (5);
- heat exchanger (6);
- melting screw fan (19);
wherein the reaction module comprises:
- main reactor (7);
- level meter (34);
- burner and furnace (18);
- reflux tower (8);
- reflux fan (22);
- heat exchanger (26);
wherein the condensation/separation module comprises:
- catalysis tower (9);
- condensation system (10);
- heat exchangers (11a and 11b);
- water cooling tower (23);
- general cooling system pump (30);
- chiller (31);
- cooling system pump (32);
wherein the exhaust/waste r-gas module comprises:
- gas washer (bubbler) (12);
- low pressure compressor (13);
- recuperative heat exchanger (14);
- synthesis gas tanks (waste r-gas) (16);
- LPG tanks (17);
- electrical energy generator (24);
- flare (25);
wherein the discharge module comprises:
- discharge control valve (35);
- roasting reactor (15);
- roasting reactor burner and furnace (20);
- catalysis tower fan (21);
- roasting reactor removal screw (27);
- carbon ash cooler (28);
- sealing screw (29).

2. System, according to claim 1, **characterized by** the fact that the feeder and dosing screw (3) standardizes the flow and through control that combines the reading on the solid flow meter (33) with the dosage made by the solid doser catalyst (36) allows the catalyst to be added precisely when entering the compactor (4).

3. System, according to claim 1, **characterized by** the fact that the catalyst is inserted into the compactor (4) by the catalyst doser (36), at a rate between 0.1% and 10% in mass relative to the input of raw material.

4. System, according to claim 1, **characterized by** the fact that the compactor (4) works with a rotation and consequent compression force generated by a rotation of 5 to 60 rpm with the objective of reaching a minimum density of 450kg/m3 for ensure good feeding into the melting screw (5) and avoid gas return.

5. System, according to claim 1, **characterized in that** the compactor (4) compresses the raw material together with the catalyst and guides them to a melting screw (5).

6. System, according to claim 1, **characterized in that** the melting screw (5) preheats the material to a temperature between 200 °C and 350 °C.

7. System, according to claim 1, **characterized in that** after leaving the melting screw (5), the material enters a heat exchanger (6), which heats the material between 350 °C and 450 °C.

8. System, according to claim 1, **characterized by** the fact that the pyrolysis reaction occurs in the main reactor (7) in the temperature range between 420 °C and 460 °C and with a gauge pressure of - 20.0 to + 50.0 KPa (- 0.2 to + 0.5 Bar), for a residence time of 10 minutes to 4 hours, preferably 2 to 3 hours.

9. System, according to claim 8, **characterized by** the fact that the main reactor (7) is of the cstr type (continuous stirred-tank reactor), with a centralized and split anchor-shaped shaft, which works at a rotation between 1 and 30 rpm, and can rotate both clockwise and counterclockwise.

10. System, according to claim 9, **characterized by** the fact that the main reactor (7) has an LID index between 3.5 and 7.0, and is jacketed to receive the necessary heat from the furnace to carry out the reaction pyrolytic.

11. System, according to claim 10, **characterized by** the fact that the main reactor (7) further comprises a shaft weighing between 600 and 2000 kg and presenting at its base, right after the anchor, a helicoid-shaped termination that together with the discharge valve (35) and sealing screw (29) allows the removal of carbon ash to be continuous or intermittent.

12. System, according to claim 1, **characterized in that** the temperature of the hydrocarbon stream at the outlet of the reflux tower (8) is maintained between 220 °C and 320 °C, preferably between 240 °C and 280 °C with turbulence with a Reynolds number between 30,000 and 300,000, and without catalytic metals, in which temperature control is carried out by a fan (22) that circulates cold air in its jacket.

13. System, according to claim 12, **characterized by** the fact that the reflux **tower (8) has a diverging conical shape in its jacket with a system of rings and "Chinese hats" that combined with the flow rate of the reactor output stream main reactor (7)** provide a turbulent flow to maximize thermal exchange and at the same time allow the heavy fraction (molecules with chains higher than C20-C28) to flow and return to the main reactor (7).

14. System, according to claim 1, **characterized by** the fact that the catalysis tower (9) with an LID index of 3.0 to 5.0, allows a residence time of 2 to 12 seconds and has a temperature catalysis between 350 °C and 550 °C.

15. System, according to claim 1, **characterized in that** the condensation system (10) condenses the gas at temperatures between 240 °C and 310 °C.

16. System, according to claim 1, **characterized in that** the fluid is condensed at a temperature of up to 110 °C and at a second point up to 10 °C, using chilled water, between 0 °C and -15 °C , preferably -5 °C, coming from a chiller (31).

17. System, according to claim 1, **characterized by** the fact that condensation is carried out in the recuperative heat exchanger (14) by the increase in pressure obtained by the compressor (13), with working pressure varying from 1.5 bar to 5 bar, and condensation temperature of 30 °C to 70 °C.

18. System, according to claim 1, **characterized in that** the gas is washed in a gas washer (bubbler) (12) mainly with a CaOH or NaOH solution.

19. System, according to claim 1, **characterized by** the fact that the waste r-gas tanks (16) store the residual r-gas at a pressure of 4 to 12 bar, and feed the burners that provide thermal energy to the furnaces (18 and 20).

20. System, according to claim 1, **characterized by** the fact that both LPG and r-gas/Syngas are transported to the burner and furnace (18) of the main reactor (7), and to the burner and furnace (20) of the roasting reactor (15) by the storage pressure of its tanks.

21. System, according to claim 1, **characterized by** the fact that the energy reuse of the burner and furnace (18) is done through the recirculation in a closed circuit of hot gas using a melting screw fan (19), in which the hot gas return at the burner and furnace inlet (18) is 450°C to 550°C.

22. System, according to claim 1, **characterized by** the fact that hot air recirculation in the burner and furnace (18) is carried out in a closed circuit between furnace (18), main reactor jacket (7) heat exchanger (26) post reflux tower (8), and heat exchanger (6) for plastic melting.

23. System, according to claim 1, **characterized in that** the discharge of carbon ash generated in the main reactor (7) is carried out by joint operation between the discharge valve (35), the sealing screw (29) and the main reactor shaft (7), being coupled to the roasting reactor (15) which continuously revolves the material and heats it up to 500-6000 °C.

24. System, according to claim 23, **characterized by** the fact that the roasting reactor (15) has an LID index between 4.3 and 5.6, and has a heating jacket supplied by the burner and furnace (20).

25. System, according to any one of claims 1 to 24, **characterized in that** the final product is extracted through the roasting reactor removal screw (27) and cooled to 70°C in the carbon ash cooler (28), in which the gases generated by this roasting process are also absorbed by the compression system and used as plant gases, being inserted into the bubbler (12) and, after cooling, the material is sent through screw conveyors to be stored.

26. Process for energy-efficient transformation of various plastic waste into liquid hydrocarbons using the system as defined in any one of claims 1 to 25, **characterized by** comprising the following steps:
(a) Preparation of the material with removal and control of contaminants, and removal of water;
(b) Homogenization and feeding of the material into the pyrolysis reactor;
(c) Pyrolysis reaction;
(d) Treatment, condensation and separation of produced hydrocarbons;
(e) Treatment and storage of synthesis gas;
(f) Use of stored synthesis gas to heat the main and secondary reactors and generate electrical and thermal energy;
(g) Thermal reuse and exhaustion of burned gases; and
(h) Removal and treatment of carbon ash.

27. Process, according to claim 26, **characterized by** the fact that step (a) comprises the following sub-steps:
a.1 Fines separating sieving, equivalent to a rotating trommel sieve;
a.2 Manual separation line to remove fabrics and bulky items;
a.3 Magnetic separation to remove magnetic ferrous material;
a.4 Crushing to reach a maximum particle size of 250mm;
a.5 Removal of plastics (films) by suction;
a.6 Grinding to obtain particles with a maximum size of 25mm;
a.7 Washing with a solution bath to remove contaminants such as chlorinated, oxygenated and silicon;
a.8 Centrifuge drying to eliminate residual impurities and initial drying;
a.9 Agglutination for final drying of the material and increasing apparent density; and
a.10 Storage and transportation.

28. Process, according to claim 26 or 27, **characterized by** the fact that step (a) further enable the receipt of plastic material contained in various types of waste and treat them mechanically and chemically with a process involving a specific sieving sequence, crushing, suction, grinding, washing, centrifugation and agglutination, wherein the treated waste meets the following specifications:
- Maximum moisture content 5%;
- Bulk density between 200 kg/m³ and 450 kg/m³;
- Maximum particle size 25mm;
- Maximum 300 ppm-m of total chlorides;
- Maximum 1100 ppb-m of total oxygenates;
- Maximum 300 ppb-m of nitrogen;
- Maximum 500 ppb-m of total sulfur;
- Maximum 15 ppm-m arsenic;
- Maximum 50 ppm-m copper;
- Maximum 5 ppm-m of mercury;
- Maximum 5000 ppm-m sodium;
- Maximum 150 ppm-m of lead; and
- Maximum 1100 ppm-m silicon.

29. Process, according to claim 26, **characterized by** the fact that in step (b), feeding into the pyrolysis reactor is started when the storage silo (2) is full, wherein when leaving the silo, the raw material passes through a feeder and dosing screw (3), standardizing the flow and through a control that combines the reading on the solid flow meter (33) with the dosage made by the catalyst doser (36), allowing the catalyst to be added precisely when entering the compactor (4) at a rate between 0.1% and 10% by mass depending on the input of raw material.

30. Process, according to claim 26, **characterized by** the fact that the compactor (4) feeds a melting screw (5), melting the material and raising its temperature to between 200 °C and 350 °C, where after leaving the melting screw (5), the material enters a heat exchanger (6), which, receiving heat from the gas burned in the furnace (18), heats the material between 350 °C and 450 °C and feeds it to the main reactor (7).

31. Process, according to claim 26, **characterized by** the fact that in step (c), the pyrolysis reaction occurs in the main reactor (7) in the temperature range between 420 °C and 460 °C and with a gauge pressure of - 20.0 to + 50.0 KPa (- 0.2 to + 0.5 Bar), during a residence time between 10 minutes and 4 hours, preferably 2 to 3 hours.

32. Process, according to claim 26, **characterized by** the fact that in step (d) the hydrocarbons produced are condensed at three points, first in the condensation system (10), the second in the heat exchangers (11a and 11b) and the third in the recuperative heat exchanger (14).

33. Process, according to claim 32, **characterized by** the fact that in the condensation system (10) the gas is condensed at temperatures between 240 °C and 310 °C.

34. Process, according to claim 32, **characterized by** the fact that in the heat exchangers (11a and 11b), the fluid is condensed at a temperature of up to 110 °C and at a second point up to 10 °C.

35. Process, according to claim 32, **characterized by** the fact that in the recuperative heat exchanger (14), the working pressure varies from 1.5 bar to 5 bar, using a condensing temperature of 30 °C to 70 °C.

36. Process, according to claim 26, **characterized by** the fact that in step (e), the waste r-gas is stored in the waste r-gas tanks (16) at a pressure of 4 to 12 bar.

37. Process, according to claim 36, **characterized by** the fact that the gas stored in the waste r-gas tanks (16) is used to feed the burners that provide thermal energy for the furnaces (18 and 20), in which they work at temperatures between 750 °C and 1,200 °C.

38. Process, according to claim 26, **characterized by** the fact that in step (g) the recirculation of hot air in the burner and furnace (18) is carried out in a closed circuit between furnace (18), main reactor jacket (7) heat exchanger (26) post reflux tower (8), and heat exchanger (6) for plastic melting, in which the return gas to the furnace (18) has a temperature between 400°C and 550°C.

39. Process, according to claim 26, **characterized by** the fact that in step (h), after being dried in the roasting reactor (15), the carbon ash is conveyed through a removal screw (27) from the roasting reactor to cooler tank (28) where it will remain for 5 to 15 hours until cooled.

40. Process, according to claim 39, **characterized by** the fact that the carbon ash is used in the sealing screw (29) of the material removal system from the main reactor (7) or is sent to the final stock silo and packaging for use.

41. Process, according to any one of claims 26 to 40, **characterized by** the fact that it is carried out continuously or in an extended batch, in which the continuous form occurs with the discharge valve (35) having its opening controlled, the sealing screw (29) inserting material and the main reactor shaft (7) rotating between 20 and 30 rpm in the discharge direction, and in the extended batch, the discharge valve (35) operates closed and opens only at the moment of complete discharge of the material contained in the main reactor (7).

42. Hydrocarbons produced according to the process defined in any one of claims 26 to 41, **characterized by** the fact that they are liquid, pasty, solid and gaseous, coming from recycled sources, consisting of synthesis gas, light hydrocarbon, r-naphtha, r-diesel, paraffin and carbon black or activated carbon.

43. Hydrocarbons, according to claim 42, **characterized by** the fact that the synthesis gas has a final boiling point of 30 ° C, and is selected from the group consisting mainly of propane, butane, methane, ethane, propylene and iso-propylene.

44. Hydrocarbons according to claim 42, **characterized by** the fact that r-naphtha has an initial boiling point of 30 °C and a final boiling point of 240 °C, and is selected from the group consisting mainly of alkanes, paraffins, iso-paraffins and olefins.

45. Hydrocarbons, according to claim 42, **characterized by** the fact that the r-diesel has an initial boiling point of 240 °C and a final boiling point of 310 °C, and is selected from the group consisting mainly of alkanes, paraffins, iso-paraffins and olefins.

46. Hydrocarbons, according to claim 42, **characterized by** the fact that the paraffin has an initial boiling point of 310 °C and a final boiling point above 330 °C, in which it is preferably solid at room temperature, liquid between 35 ° C and 55 °C, and is selected from the group consisting mainly of low density linear chains paraffins.

47. Hydrocarbons, according to claim 42, **characterized by** the fact that the carbon black has a particle size between 10 and 320 nm and an apparent density (dbp) between 50 and 120, and the activated carbon has a humidity of up to 5 %, density between 400 and 600 kg/m3, surface area min of 300 m2/g and particle size (<100µm) minimum of 80%.

48. Use of hydrocarbons as defined in any one of claims 42 to 47, **characterized by** the fact that it is:
- Bottled recycled gas to replace fossil gas in heating applications (waste r-gas);
- Source for generating renewable energy from recycled gas (waste r-gas);
- Naphtha recycled in petrochemical crackers to produce virgin plastics (r-naphtha);
- Recycled additive for fossil diesel oil (r-diesel);
- Recycled raw materials for the chemical industry replacing fossil hydrocarbons (light r-naphtha/ r-diesel);
- Recycled chemical inputs replacing fossil inputs (light r-naphtha/ r-diesel);
- Sustainable burning oils to replace fossil oils (light r-naphtha/r-diesel);
- Recycled paraffins for industrial and non-industrial applications replacing fossil paraffins (r-paraffins);
- Recycled carbon black replacing fossil carbon black (carbon black) and recycled activated carbon replacing fossil material.

49. Use of hydrocarbons, according to claim 48, **characterized by** the fact that it is further for:
- Valorization of low-value-added plastics, multilayer plastics and multicomponent plastics that could end up in landfill;
- Production of petrochemical naphtha from recycled sources (r-naphtha) to replace fossil naphtha;
- Production of diesel from recycled sources (r-Diesel) and replacement of fossil Diesel;
- Production of other hydrocarbons (r-hydro) with application in the chemical industry;
- Production of light paraffins (light r-paraffins);
- Production of heavy paraffins (r-heavy paraffins);
- Production of carbon black and activated carbon (r-carbon black and r-activated carbon);
- Production of synthesis gas (waste r-gas); and
- Production of electrical energy from renewable sources.
